# EUROPÄISCHE PATENTSCHRIFT

(11) **EP 1 528 197 B1**
(45) Veröffentlichungstag und Bekanntmachung des Hinweises auf die Patenterteilung: **12.08.2009**
(21) Anmeldenummer: 04024575.5
(22) Anmeldetag: 14.10.2004
(51) Int. Cl.: E05B 63/20, E05B 65/00, B60R 7/04, E05C 1/14

(54) **Schloss mit lösbarer Verrastung**
Lock with releasable dog
Serrure avec détention relachable

(30) Priorität: 29.10.2003 DE 20316663 U
(43) Veröffentlichungstag der Anmeldung: 04.05.2005
(73) Patentinhaber: Böllhoff Verbindungstechnik GmbH, 33649 Bielefeld (DE)
(72) Erfinder: Figge, Hans-Ulrich, 33758 Schloss-Holte (DE); Dembowsky, Hans-Joachim, 21035 Hamburg (DE); Jodeleit, Martin, 33617 Bielefeld (DE)
(74) Vertreter: Hauck Patent- und Rechtsanwälte

(56) Entgegenhaltungen:
- DE-B- 1 120 929
- DE-C- 344 005
- DE-C- 818 462
- US-A- 2 142 456
- US-A- 2 812 204

## Beschreibung

Die vorliegende Erfindung betrifft eine Anordnung aus einer Wand eines Stauraumes, einem Deckel zum Verschließen einer Öffnung in der Wand und einem Schloss für den Deckel, sowie ein Schloss für die Anordnung.

Ein derartiges Schloss hat üblicherweise einen ein- und ausklappbaren Griff, durch den eine verschiebbar Verriegelungszunge aus einer Verriegelungsstellung entgegen der Kraft einer Rückstellfeder in eine Entriegelungsstellung verstellbar ist. In der Verriegelungsstellung sichert die Verriegelungszunge den Ladeboden in seiner Stellung im Kofferraum, während sie in der Entriegelungsstellung den Ladeboden freigibt, so dass der Ladeboden von der Öffnung abgehoben werden kann.

Da die Verriegelungszunge beim Abheben und Einsetzen des Ladebodens in seine Entriegelungsstellung gelangen kann, in der sie relativ weit aus dem Schloss vorsteht, kann es hierbei zu einer Beschädigung der von einem Teppich verkleideten Ladekante der Öffnung im Kofferraum kommen. Auch erschwert die vorstehende Verriegelungszunge das Abheben und Einsetzen des Ladebodens.

Aus dem Dokument US-A-2812204 sind eine Anordnung gemäß dem Oberbegriff des Anspruchs 1 sowie ein Schloss gemäß dem Oberbegriff des Anspruchs 5 bekannt. Aus dem Dokument DE 344 005 C ist eine Anordnung bekannt, bei dem in Übereinstimmung mit dem ersten Merkmal des kennzeichnenden Teiles des Anspruchs 1 eine Verrastung einer an einem Schlossgehäuse vorgesehene Entrastungsfeder aufweist, die mit einem Verrastungsglied so zusammen wirkt, dass sie beim Einsetzen eines Deckels in eine Öffnung das Verrastungsglied aus seiner Verrastungsstellung in eine Entrastungsstellung bewegt und beim Abheben des Deckels eine Bewegung des Verrastungsgliedes aus der Entrastungsstellung in die Verrastungsstellung zulässt.

Der vorliegenden Erfindung liegt die Aufgabe zugrunde, eine Anordnung aus einer Wand eines Stauraumes, einem Deckel zum Verschließen einer Öffnung in der Wand und einem Schloss für den Deckel, sowie eine Schloss für die Anordnung, insbesondere in einem Kraftfahrzeug, zu schaffen, bei denen die Verriegelungszunge das Abheben und Einsetzen des Deckels in die Öffnung nicht behindert.

Die erfindungsgemäße ausgebildete Anordnung ist in Anspruch 1 definiert, und das erfindungsgemäß ausgebildete Schloss ist in Anspruch 5 definiert.

Bei der Anordnung und dem Schloss gemäß der Erfindung ist eine Verrastung vorgesehen, die die Verriegelungszunge bei abgehobenem Deckel in der Entriegelungsstellung arretiert und bei eingesetztem Deckel freigibt.

Wenn daher der Deckel von der Öffnung in der Wand abgehoben wird, sorgt die erfindungsgemäß vorgesehene Verrastung dafür, dass die Verriegelungszunge in ihrer Entriegelungsstellung bleibt, und zwar unabhängig davon, in welcher Stellung der Griff sich befindet. Die Verrastung löst sich somit auch dann nicht, wenn der Griff zwischen seiner ausgeklappten und eingeklappten Stellung verstellt wird. Erst wenn der Deckel wieder in die Öffnung der Wand eingesetzt wird, löst sich die Verrastung, worauf die Verriegelungszunge durch ihre Rückstellfeder in die Verriegelungsstellung bewegt wird.

Durch die erfindungsgemäß vorgesehene Verrastung wird somit sichergestellt, dass die Verriegelungszunge beim Abheben und Einsetzen des Deckels in die Öffnung der Wand in ihrer Entriegelungsstellung eingezogen bleibt, so dass sie nicht weit genug aus dem Deckel vorsteht, um den Rand der Öffnung in der Wand beschädigen zu können.

Gemäß der Erfindung weist die Verrastung eine mit dem Schlossgehäuse fest verbundene Rastnocke und ein an der Verriegelungszunge vorgesehenes Verrastungsglied auf, das in einer Verrastungsstellung zum Arretieren der Verriegelungszunge in Eingriff mit der Rastnocke ist und in einer Entrastungsstellung zum Freigeben der Verriegelungszunge außer Eingriff mit der Rastnocke ist. Das Verrastungsglied wirkt mit einer am Schlossgehäuse vorgesehenen Entrastungsfeder so zusammen, dass die Entrastungsfeder beim Einsetzen des Deckels das Verrastungsglied aus seiner Verrastungsstellung in die Entrastungsstellung bewegt und bei Abheben des Deckels eine Bewegung des Verrastungsgliedes aus der Entrastungsstellung in die Verrastungsstellung zulässt. Die Entrastungsfeder ist hierbei so angeordnet und ausgebildet, dass sie sich beim Einsetzen des Deckels an eine Anlagefläche der Wand anlegt, um das Verrastungsglied außer Eingriff mit der Rastnocke zu bewegen. Somit wird die Verrastung beim Einsetzen des Deckels in die Öffnung selbsttätig gelöst, so dass die Verriegelungszunge von der Rückstellfeder in ihre Verriegelungsstellung bewegt werden kann. Der Deckel ist dann wieder durch die Verriegelungszunge in ihrer Lage gesichert.

Weitere vorteilhafte Ausgestaltungen der Erfindung sind in den Ansprüchen definiert.

Anhand der Zeichnungen wird ein Ausführungsbeispiel der Erfindung näher erläutert. Es zeigt:
Figuren 1-6 Längsschnitte durch ein erfindungsgemäß ausgebildetes Schloss in unterschiedlichen Betriebszuständen und
Figuren 7, 8 perspektivische Ansichten des Schlosses in den Betriebsstellungen der Fig. 1 und Fig. 4.

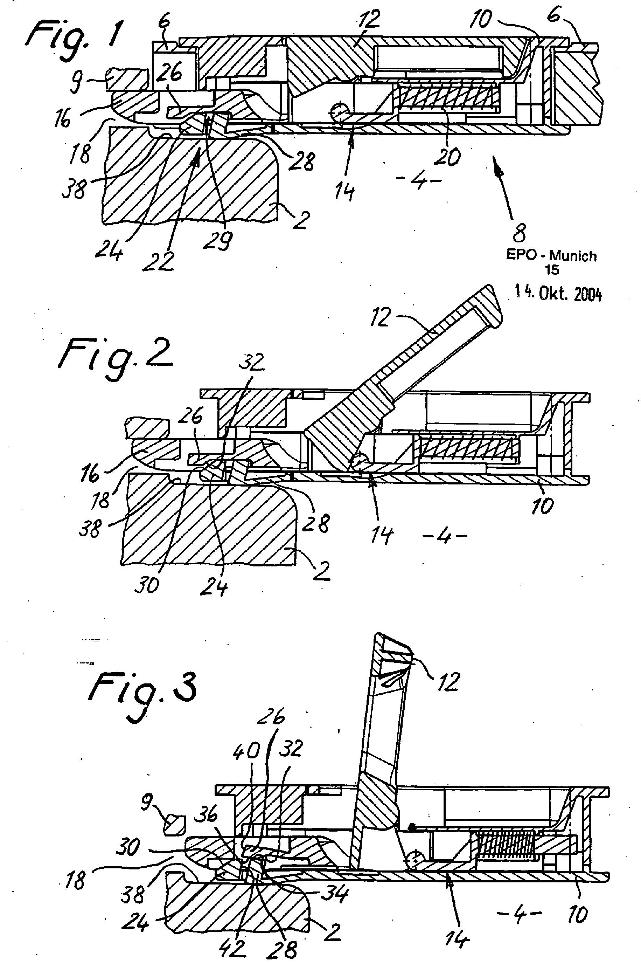

In Fig. 1 ist eine Wand 2 eines im übrigen nicht dargestellten Stauraumes angedeutet. Die Wand 2 hat eine Öffnung 4, die durch einen Deckel 6 verschlossen werden kann. Der Deckel 6 ist mit einem Schloss 8 versehen, das mit einem Schlossträger 9 der Wand 2 zusammenwirkt, um den Deckel 6 in seiner in die Öffnung 4 eingesetzten Stellung zu sichern.

Bei der Wand 2 und dem Deckel 6 kann es sich um eine Abdeckung bzw. den Ladeboden im Kofferraum eines Kraftfahrzeuges handeln. Es versteht sich jedoch, dass auch andere Anwendungen des im folgenden zu beschreibenden Schlosses denkbar sind.

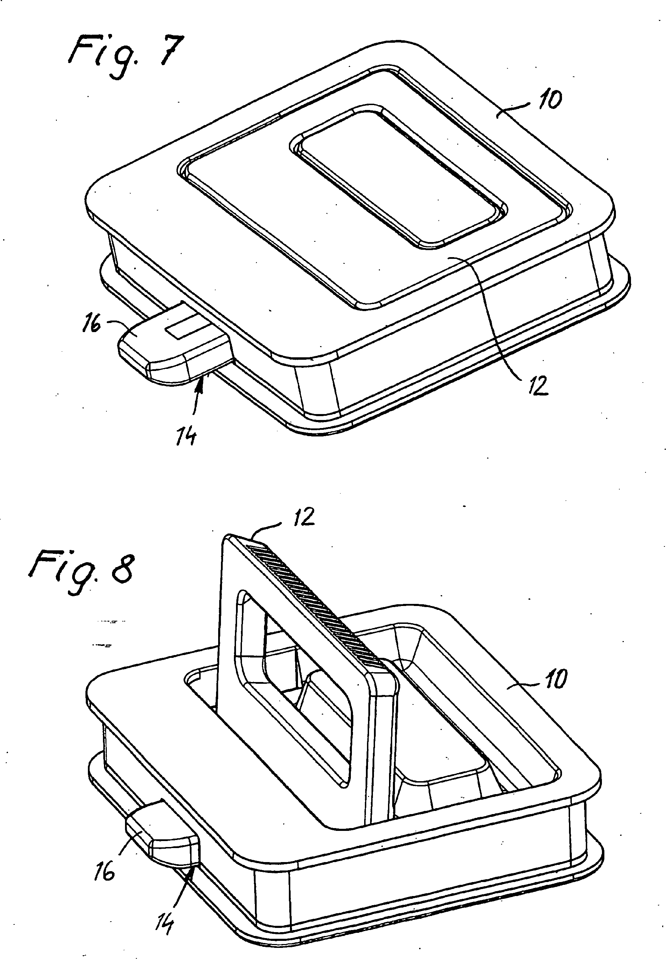

Das Schloss 8 weist ein Schlossgehäuse 10 auf, das in dem Deckel 6 festgelegt und flächenbündig zum Deckel 6 angeordnet ist. Im Schlossgehäuse 10 ist ein Griff 12 mittels seitlicher Zapfen (in den Figuren nicht zu sehen) schwenkbar gelagert und zwischen einer eingeklappten Stellung (Fig. 1 und 7) und einer ausgeklappten Stellung (Fig. 3 und 8) schwenkbar. Der Griff 12 ist in der eingeklappten Stellung (Fig. 1 und 7) flächenbündig zur Oberseite des Schlossgehäuses 10 und in der vollständig ausgeklappten Stellung (Fig. 3 und 8) unter einem Winkel von ca. 90° bezüglich der Oberfläche des Schlossgehäuses 10 angestellt. Mit Hilfe des Griffes 12 kann der Deckel 6 insgesamt von der Öffnung 4 der Wand 2 abgehoben und in diese wieder eingesetzt werden.

Das Schloss 8 weist ferner eine Verriegelungszunge 14 auf, die in einer kanalartigen Ausnehmung im unteren Bereich des Schlossgehäuses 10 längsverschiebbar gelagert ist. Die Verriegelungszunge 14 ist durch den Griff 12 aus einer Verriegelungsstellung (Fig. 1) entgegen der Kraft einer Rückstellfeder 20 in eine Entriegelungsstellung (Fig. 3) verstellbar. Die Verriegelungszunge 14 ist an ihrem aus dem Schlossgehäuse 10 vorstehenden Ende mit einem Verriegelungsabschnitt 16 versehen, der in der Verriegelungsstellung in eine nutartige Aufnahme 18 des Schlossträgers 9 greift, um den Deckel 6 zu sichern. Wird die Verriegelungszunge 14 durch den Griff 12 aus der Verriegelungsstellung in die Entriegelungsstellung (Fig. 3) verstellt, wird der Verriegelungsabschnitt 16 aus der Aufnahme 18 des Schlossträgers 9 herausgezogen, so dass dann der Deckel 6 von der Öffnung 4 abgehoben werden kann. Die Rückstellfeder 20, die zwischen einer Anlagefläche der Verriegelungszunge 14 und einer Anlagefläche des Schlossgehäuses 10 eingespannt ist, dient zum Zurückstellen der Verriegelungszunge 14 in ihre Verriegelungsstellung, wie noch genauer erläutert wird.

Das Schloss 8 weist ferner eine Verrastung 22 auf, die zum Arretieren der Verriegelungszunge 14 in ihrer Entriegelungsstellung dient. Die Verrastung 22 besteht aus einer am Schlossgehäuse 10 fest angeordneten Rastnocke 24, einem an der Verriegelungszunge 14 vorgesehenen Verrastungsglied 26 und einer am Schlossgehäuse 10 vorgesehenen Entrastungsfeder 28. Das Verrastungsglied 26 ist als Verrastungsfeder in Form eines Federabschnittes ausgebildet, der an dem Verrastungsglied 14 einstückig angeformt ist und mit der Rastnocke 24 so zusammenwirken kann, dass die Verriegelungszunge 16 in ihrer Entriegelungsstellung arretiert wird, wie im folgenden noch genauer erläutert wird. Die Entrastungsfeder 28 ist ebenfalls als Federabschnitt ausgebildet, der am Boden des Schlossgehäuses 10 einstückig angeformt und gegenüber diesem federnd auslenkbar ist. Die Entrastungsfeder 28 dient dazu, das Verrastungsglied 26 aus einer Verrastungsstellung in seine Entrastungsstellung zu bewegen, wie ebenfalls noch genauer erläutert wird.

Die Funktionsweise des Schlosses 8 und insbesondere ihrer Verrastung 22 wird nun genauer erläutert.

Es wird zunächst auf Fig. 1 und 7 Bezug genommen. Wenn der Deckel 6 in die Öffnung 4 der Wand 2 eingesetzt ist und der Griff 12 sich in seiner eingeklappten Stellung befindet, wird die Verriegelungszunge 14 von der Rückstellfeder 20 in ihre Verriegelungsstellung gedrückt, in der der Verriegelungsabschnitt 16 in die Aufnahme 18 des Schlossträgers 9 greift. Die Verrastung 20 ist dann gelöst; in diesem Zustand erstrecken sich die Rastnocke 24 und die Entrastungsfeder 28 in eine Vertiefung 29 an der Unterseite des Verrastungsgliedes 26, so dass die Verrastung 22 wirkungslos ist.

Der Griff 12 kann nun von Hand bis in die in Fig. 2 gezeigte Stellung hochgeklappt werden, ohne dass der Griff 12 eine Wirkung auf die Verriegelungszunge 14 ausübt. Wird der Griff 12 aus der in Fig. 2 gezeigten Stellung weiter in die in Fig. 3 gezeigte Stellung hochgeklappt, so verschiebt der Griff 12 die Verriegelungszunge 14 entgegen der Kraft der Rückstellfeder 20 in die Entriegelungsstellung, in der die Verriegelungszunge 14 weitgehend ins Innere des Schlossgehäuses 8 eingezogen ist und der Verriegelungsabschnitt 16 der Verriegelungszunge 12 außer Eingriff mit der Aufnahme 18 des Schlossträgers 9 gelangt.

Bei der Bewegung der Verriegelungszunge 14 aus der Verriegelungsstellung (Fig. 2) in die Entriegelungsstellung (Fig. 3) gleitet das Verrastungsglied 26 mit einer Gleitfläche 32 über eine schräg verlaufende Nockenfläche 30 der Rastnocke 24, wodurch das Verrastungsglied 26 (in den Figuren) nach oben federnd ausgelenkt wird. Während sich die Verriegelungszunge 14 weiter in Richtung auf ihre Entriegelungsstellung bewegt, gleitet das Verrastungsglied 26 über die Rastnocke 24 hinweg und gelangt in den Bereich der Entrastungsfeder 28, so dass an den freien Enden des Verrastungsgliedes 26 und der Entrastungsfeder 28 vorgesehene seitliche Anlageflächen 32 und 34 sich aneinander anlegen. In diesem Zustand, der in Fig. 3 dargestellt ist, liegt die Entrastungsfeder 28 an einer Anlagefläche 38 des Schlossträgers 9 an, so dass die Entrastungsfeder 28 in der in Fig. 3 gezeigten Stellung gehalten wird.

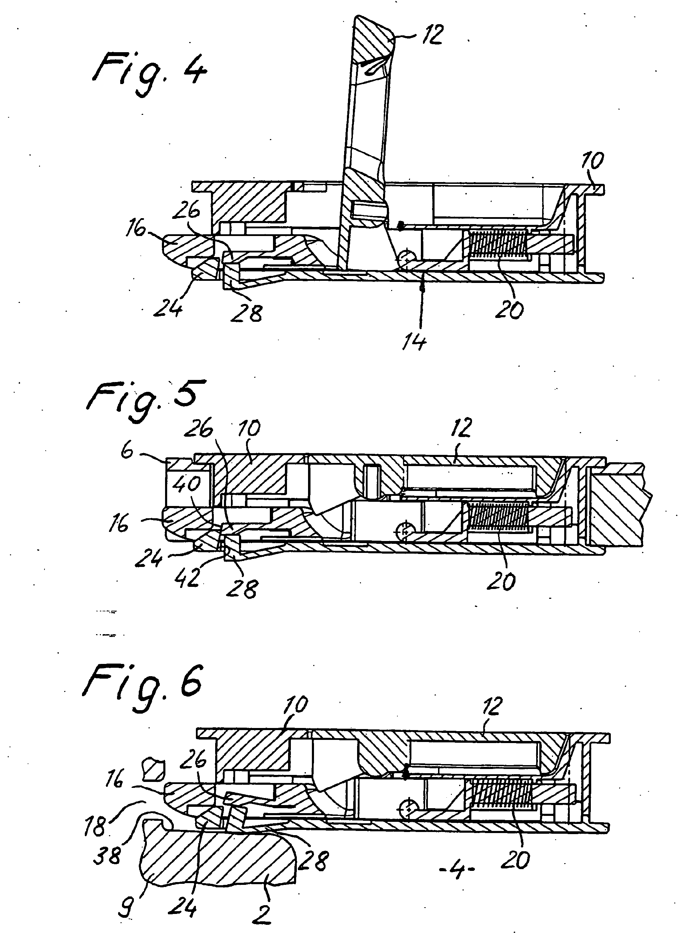

Der Deckel 6 kann nun mit Hilfe des Griffs 12 von der Öffnung 8 insgesamt abgehoben werden. Sobald sich die Entrastungsfeder 28 von der Anlagefläche 38 des Schlossträgers 9 entfernt, gibt die Entrastungsfeder 28 nach, so dass sich das Verrastungsglied 26 aufgrund seiner Federwirkung in seine Ausgangslage bewegt. Hierbei verstellt das Verrastungsglied 26 die Entrastungsfeder 28 aus der in Fig. 3 gezeigten Stellung in die in Fig. 4 gezeigte Stellung. Dies wird dadurch ermöglicht, dass die Federkraft des Verrastungsgliedes 26 größer als die Federkraft der Entrastungsfeder 28 ist.

Wenn nun der Griff 12 losgelassen wird und in der Griffmulde des Schlossgehäuses 10 flächenbündig versinkt (Fig. 5), drückt die Rückstellfeder 20 das Verrastungsglied 26 mit der Rastnocke 24 in Eingriff; das Verrastungsglied 26 liegt dann mit einer stirnseitigen Rastfläche 40 an einer rückseitigen Rastfläche 42 der Rastnocke 24 an. Die Verrastung 22 befindet sich nun in ihrer Verrastungsstellung, in der sie die Verriegelungszunge 14 in ihrer Entriegelungsstellung hält. Die Verrastung 22 sorgt somit dafür, dass die Entriegelungszunge 14 in ihrer Entriegelungsstellung bleibt, in der sie praktisch nicht mehr aus dem Deckel 6 vorsteht. Die Verriegelungszunge 14 behindert daher das Einsetzen und Abheben des Deckels 6 in keiner Weise.

Wenn der Deckel 6 wieder in die Öffnung 4 der Wand 2 eingesetzt wird, gelangt die Entrastungsfeder 28 in Anlage mit der Anlagefläche 38 des Schlossträgers 9. Hierdurch wird die Entrastungsfeder 28 (in den Figuren) nach oben gedrückt, so dass sie das Verrastungsglied 26 wieder in seine Entrastungsstellung auslenkt. Die Verriegelungszunge 14 wird dann von der Rückstellfeder 20 zurück in ihre Entriegelungsstellung gedrückt, in der der Verriegelungsabschnitt 16 in die Aufnahme 18 des Schlossträgers 9 vorsteht, um den Deckel 6 an der Wand 2 zu sichern.

## Patentansprüche

1. Anordnung aus einer Wand (2) eines Stauraumes, einem Deckel (6) zum Verschließen einer Öffnung (4) in der Wand und einem Schloss für den Deckel, mit
einem Schlossgehäuse (10), das in dem Deckel (6) angeordnet ist,
einem Griff (12), der in dem Schlossgehäuse (10) drehbar gelagert ist und manuell zwischen einer eingeklappten Stellung und einer ausgeklappten Stellung schwenkbar ist, um den Deckel (6) aus der Öffnung (4) abheben und in die Öffnung (4) einsetzen zu können,
einer Verriegelungszunge (14), die im Schlossgehäuse (10) verschiebbar gelagert ist und durch Schwenken des Griffes (12) aus einer den Deckel (6) verriegelnden ausgefahrenen Verriegelungsstellung entgegen der Wirkung einer Rückstellfeder (20) in eine den Deckel (6) freigebende eingefahrene Entriegelungsstellung bewegbar ist, und
einer Verrastung (22), die die Verriegelungszunge (14) bei abgehobenem Deckel (6) in der Entriegelungsstellung arretiert und bei eingesetztem Deckel (6) freigibt, wobei die Verrastung (22) eine mit dem Schlossgehäuse (10) fest verbundene Rastnocke (24) und ein an der Verriegelungszunge (14) vorgesehenes Verrastungsglied (26) aufweist, das in einer Verrastungsstellung zum Arretieren der Verriegelungszunge (14) in Eingriff mit der Rastnocke (24) ist und in einer Entrastungsstellung zum Freigeben der Verriegelungszunge (14) außer Eingriff mit der Rastnocke (24) ist,
**dadurch gekennzeichnet,**
**dass** die Verrastung (22) eine am Schlossgehäuse (10) vorgesehene Entrastungsfeder (28) aufweist, die dem Verrastungsglied (26) zugeordnet ist, um beim Einsetzen des Deckels (6) das Verrastungsglied (26) aus seiner Verrastungsstellung in die Entrastungsstellung zu bewegen und beim Abheben des Deckels (6) eine Bewegung des Verrastungsgliedes (26) aus der Entrastungsstellung in die Verrastungsstellung zuzulassen, und
**dass** das Verrastungsglied (26) als Federabschnitt der Verriegelungszunge (14) und die Entrastungsfeder (28) als Federabschnitt des Schlossgehäuses (10) ausgebildet ist, wobei die Federkraft des Verrastungsgliedes (26) größer als die der Entrastungsfeder (28) ist.

2. Anordung nach Anspruch 1, **dadurch gekennzeichnet, dass** die Entrastimgsfeder (28) einer Anlagefläche (38) der Wand (2) zugeordnet ist, um beim Einsetzen des Deckels (6) das Verrastungsglied (26) aus seiner Verrastungsstellung in die Entrastungsstellung zu bewegen.

3. Anordung nach Anspruch 1 oder 2, **dadurch gekennzeichnet, dass** die Rastnocke (24) eine schräg verlaufende Nockenfläche (30) hat, durch die bei einer Verstellung der Verriegelungszunge (14) in die Entriegelungsstellung das Verriegelungsglied (26) in Anlage mit der Entrastungsfeder (28) bewegt wird, sodass das Verrastungsglied (26) mit der Entrastungsfeder (28) zusammenwirken kann.

4. Anordnung nach einem der vorhergehenden Ansprüche, **dadurch gekennzeichnet, dass** die Federabschnitte des Verrastungsgliedes (26) und der Entrastungsfeder (28) jeweils an ihrem freien Ende eine seitliche Anlagefläche (34, 36) haben, über die sie in der Entriegelungsstellung der Verriegelungszunge (14) zusammenwirken.

5. Schloss für eine Anordnung nach einem der vorhergehenden Ansprüche, mit
einem Schlossgehäuse (10),
einem Griff (12), der in dem Schlossgehäuse (10) drehbar gelagert ist und manuell zwischen einer eingeklappten Stellung und einer ausgeklappten Stellung schwenkbar ist,
einer Verriegelungszunge (14), die im Schlossgehäuse (10) verschiebbar gelagert ist und durch Schwenken des Griffes (12) aus einer Verriegelungsstellung entgegen der Wirkung einer Rückstellfeder (20) in eine Entriegelungsstellung bewegbar ist, und
einer Verrastung (22), die die Verriegelungszunge (14) in der Entriegelungsstellung arretiert,
wobei die Verrastung (22) eine mit dem Schlossgehäuse (10) fest verbundene Rastnocke (24) und ein an der Verriegelungszunge (14) vorgesehnes Verrastungsglied (26) aufweist, das in einer Verrastungsstellung zum Arretieren der Verriegelungszunge (14) in Eingriff mit der Rastnocke (24) ist und in einer Entrastungsstellung zum Freigeben der Verriegelungszunge (14) außer Eingriff mit der Rastnocke (24) ist,
**dadurch gekennzeichnet,**
**dass** die Verrastung (22) eine am Schlossgehäuse (10) vorgesehene Entrastungsfeder (28) aufweist, die dem Verrastungsglied (26) zugeordnet ist,
**dass** das Verrastungsglied (26) als Federabschnitt der Verriegelungszunge (14) und die Entrastungsfeder (28) als Federabschnitt des Schlossgehäuses (10) ausgebildet ist, und
**dass** die Federkraft des Verrastungsgliedes (26) größer als die der Entrastungsfeder (28) ist.

## Claims

1. An arrangement made up of a wall (2) of a storage space, a cover (6) for the closure of an opening (4) in the wall and a lock for the cover with
a lock housing (10), which is arranged in the cover (6),
a handle (12), which is rotatably mounted in the lock housing (10) and manually pivotable between a folded-in position and a folded-out position, to be able to lift the cover (6) from the opening (4) and to insert it into the opening (4),
a securing lug (14), which is slidably mounted in the lock housing (10) and movable into a retracted unlocking position releasing the cover (6) by pivoting the handle (12) out of an extended locking position locking the cover (6) against the effect of a return spring (20) and
a catch (22), which locks the securing lug (14) in the unlocking position when the cover (6) is lifted and releases it when the cover (6) is inserted, wherein the catch (22) has a locking cam (24) permanently connected with the lock housing (10) and a catch member (26) provided at the securing lug (14), which is in engagement with the latching cam (24) in a catch position for locking the securing lug (14) and is out of engagement with the locking cam (24) in a release-catch position for releasing the securing lug (14),
**characterized in that**
the catch (22) has a release-catch spring (28) provided on the lock housing (10), which is assigned to the catch member (26), in order to move the latching member (26) from its catch position into the release-catch position when the cover (6) is inserted and to permit a movement of the catch member (26) from the release-catch position into the catch position when the cover (6) is lifted, and the latching member (26) is formed as a spring section of the securing lug (14) and the release-catch spring (28) is formed as a spring section of the lock housing (10), wherein the spring force of the catch member (26) exceeds that of the release-catch spring (28).

2. The arrangement according to claim 1, **characterized in that** the release-catch spring (28) is assigned to a contact surface (38) of the wall (2) in order to move the latching member (26) from its latching position into the unlatching position when the cover (6) is inserted.

3. The arrangement according to claim 1 or 2, **characterized in that** the latching cam (24) has an inclined cam surface (30), through which the latching member (26) is moved in abutment with the release-catch spring (28) in the case of an adjustment of the securing lug (14) into the unlatching position so that the catch member (26) can cooperate with the release-catch spring (28).

4. The arrangement according to one of the previous claims, **characterized in that** the spring sections of the catch member (26) and the release-catch member (28) each have a lateral abutment surface (34, 36) on their free end, via which they cooperate in the unlocking position of the securing lug (14).

5. A lock for an arrangement according to one of the previous claims with
a lock housing (10),
a handle (12), which is rotatably mounted in the lock housing (10) and manually pivotable between a folded-in position and a folded-out position,
a securing lug (14), which is slidably mounted in the lock housing (10) and movable into an unlocking position by pivoting the handle (12) out of a locking position against the effect of a return spring (20) and
a catch (22), which locks the securing lug (14) in the unlocking position,
wherein the catch (22) has a latching cam (24) permanently connected with the lock housing (10) and a latching member (26) provided at the securing lug (14), which is in engagement with the locking cam (24) in a catch position for arresting the securing lug (14) and is out of engagement with the latching cam (24) in a release-catch position for releasing the securing lug (14),
**characterized in that**
the catch (22) has a release-catch spring (28) provided on the lock housing (10), which is assigned to the catch member (26),
the latching member (26) is formed as a spring section of the securing lug (14) and the release-catch spring (28) is formed as a spring section of the lock housing (10), and
the spring force of the catch member (26) exceeds that of the release-catch spring (28).

## Revendications

1. Agencement constitué d'une paroi (2) d'un espace de rangement, d'un couvercle (6) pour fermer une ouverture (4) dans la paroi et d'une serrure pour le couvercle, comprenant
un boîtier de serrure (10), qui est disposé dans le couvercle (6),
une poignée (12), qui est montée rotative dans le boîtier de serrure (10) et qui peut être pivotée manuellement entre une position repliée et une position déployée pour pouvoir retirer le couvercle (6) de l'ouverture (4) et l'insérer dans l'ouverture (4),
une languette de verrouillage (14) qui est montée mobile en translation dans le boîtier de serrure (10) et peut être déplacée par pivotement de la poignée (12) d'une position de verrouillage avancée verrouillant le couvercle (6) contre l'action d'un ressort de rappel (20) à une position de déverrouillage rentrée relâchant le couvercle (6), et
un mécanisme d'enclenchement (22) qui bloque la languette de verrouillage (14) dans la position de déverrouillage quand le couvercle (6) est retiré et la relâche lorsque le couvercle (6) est inséré, le mécanisme d'enclenchement (22) présentant un ergot d'encliquetage (24) raccordé fixement au boîtier de serrure (10) et, prévu sur la languette de verrouillage (14), un élément d'enclenchement (26) qui est dans une position d'enclenchement pour bloquer la languette de verrouillage (14) en prise avec l'ergot d'encliquetage (24) et est dans une position de désenclenchement pour relâcher la languette de verrouillage (14) désengagé de l'ergot d'encliquetage (24),
**caractérisé en ce que**
le mécanisme d'enclenchement (22) présente, prévu sur le boîtier de serrure (10), un ressort de désenclenchement (28) qui est associé à l'élément d'enclenchement (26) pour, lors de l'insertion du couvercle (6), déplacer l'élément d'enclenchement (26) hors de sa position d'enclenchement dans la position de désenclenchement et lors du retrait du couvercle (6) pour permettre un mouvement de l'élément d'enclenchement (26) hors de la position de désenclenchement dans la position d'enclenchement, et
l'élément d'enclenchement (26) est formé en tant que section de ressort de la languette de verrouillage (14) et le ressort de désenclenchement (28) en tant que section de ressort du boîtier de serrure (10), la force de ressort de l'élément d'enclenchement (26) étant supérieure à celle du ressort de désenclenchement (28).

2. Agencement selon la revendication 1, **caractérisé en ce que** le ressort de désenclenchement (28) est associé à une surface d'appui (38) de la paroi (2) pour déplacer l'élément d'enclenchement (26) hors de sa position d'enclenchement dans la position de désenclenchement lors de l'insertion du couvercle (6).

3. Agencement selon la revendication 1 ou 2, **caractérisé en ce que** l'ergot d'encliquetage (24) présente une surface d'ergot (30) au tracé oblique, par le biais de laquelle l'élément de verrouillage (26) est déplacé en contact avec le ressort de désenclenchement (28) lors d'un déplacement de la languette de verrouillage (14) dans la position de déverrouillage, de sorte que l'élément d'enclenchement (26) peut coopérer avec le ressort de désenclenchement (28).

4. Agencement selon l'une des revendications précédentes, **caractérisé en ce que** les sections de ressort de l'élément d'enclenchement (26) et du ressort de désenclenchement (28) présentent respectivement une surface d'appui latérale (34, 36) à leur extrémité libre, par le biais de laquelle elles coopèrent dans la position de déverrouillage de la languette de verrouillage (14).

5. Serrure pour un agencement selon l'une des revendications précédentes, comprenant
un boîtier de serrure (10),
une poignée (12), qui est montée rotative dans le boîtier de serrure (10) et qui peut être pivotée manuellement entre une position repliée et une position déployée,
une languette de verrouillage (14) qui est montée mobile en translation dans le boîtier de serrure (10) et peut être déplacée par pivotement de la poignée (12) hors d'une position de verrouillage contre l'action d'un ressort de rappel (20) dans une position de déverrouillage, et
un mécanisme d'enclenchement (22), qui bloque la languette de verrouillage (14) dans la position de déverrouillage,
le mécanisme d'enclenchement (22) présentant un ergot d'encliquetage (24) raccordé fixement au boîtier de serrure (10) et, prévu sur la languette de verrouillage (14), un élément d'enclenchement (26) qui, dans une position d'enclenchement pour le blocage de la languette de verrouillage (14), est en prise avec l'ergot d'encliquetage (24) et, dans une position de désenclenchement pour relâcher la languette de verrouillage (14), est désengagé de l'ergot d'encliquetage (24),
**caractérisée en ce que**
le mécanisme d'enclenchement (22) présente, prévu sur le boîtier de serrure (10), un ressort de désenclenchement (28) qui est associé à l'élément d'enclenchement (26),
l'élément d'enclenchement (26) est formé en tant que section de ressort de la languette de verrouillage (14) et le ressort de désenclenchement (28) en tant que section de ressort du boîtier de serrure (10), et
la force de ressort de l'élément d'enclenchement (26) est supérieure à celle du ressort de désenclenchement (28).
